# EUROPEAN PATENT SPECIFICATION

(11) **EP 4 154 489 B1**
(45) Date of publication and mention of the grant of the patent: **22.04.2026**
(21) Application number: 20726426.8
(22) Date of filing: 18.05.2020
(51) Int. Cl.: H04L 9/40

(54) **METHODS AND APPARATUSES FOR CONVEYING A MESSAGE**
VERFAHREN UND VORRICHTUNGEN ZUR ÜBERMITTLUNG EINER NACHRICHT
PROCÉDÉS ET APPAREILS DE TRANSPORT DE MESSAGE

(43) Date of publication of application: 29.03.2023
(73) Proprietor: Telefonaktiebolaget LM ERICSSON (PUBL), 16483 Stockholm (SE)
(72) Inventor: ELMDAHL, Per, 582 47 LINKÖPING (SE); SKILLERMARK, Per, 120 54 ÅRSTA (SE)
(74) Representative: Ericsson
(86) International application number: PCT/EP2020/063815
(87) International publication number: WO 2021/233519

(56) References cited:
- WO-A1-2018/196919
- WO-A2-2007/092816
- US-B1- 8 984 609

## Description

### TECHNICAL FIELD

The present disclosure relates generally to the field of message communication. More particularly, it relates to securely conveying a message selected from a collection of messages.

### BACKGROUND

In message communication (e.g., using a wireless communication scheme, such as Bluetooth, IEEE 802.11, or any scheme advocated by the Third Generation Partnership Project - 3GPP), some overhead is typically needed to convey a message. However, in many situations it may be desirable to keep the overhead as low as possible (e.g., to reduce power consumption, increase throughput, increase system capacity, etc.).

CN106375942A describes a method for transmission of the data information, which comprises that a first client compresses to-be-transmitted data information into a communication code in a corresponding format according to a preset communication rule, that the first client sends the communication code to a second client through Bluetooth communication, that the second client receives the communication code sent by the first client through Bluetooth communication, that the second client parses the communication code to obtain data information corresponding to the second client according to the preset communication rule, and that the first client and the second client adopt different operating systems. The data information which needs to be sent is compressed into the communication code in the corresponding format according to the preset communication rule.

One problem with this approach is that it is not secure. Therefore, there is a need for secure approaches for conveying messages.

The prior art shows various examples of how to improve a codebook. For example, the patent application published as WO2007092816A1 discloses techniques for remapping messages prior to encoding to improve performance are described. L designated messages among K total messages are remapped to L remapped messages, which are associated with L codewords having larger relative distance between these codewords, where L may be much less than K.

The L designated messages may be more frequently used messages and/or more important messages. The remapping allows the L codewords with larger relative distance to be sent for the L designated messages, which may improve performance. A transmitter remaps an input message to a remapped message, encodes the remapped message to obtain a codeword, and sends the codeword to convey the input message. A receiver decodes a received codeword to obtain a decoded message and demaps the decoded message to obtain a demapped message, which is an estimate of the input message sent by the transmitter. Another example is the patent application published as WO2007092816A1 discloses a communication method between mobile units, and in particular between vehicles, in which information transmitted between the mobile units is coded by means of an encoder on the transmitter side and decoded by means of a decoder at the receiver side, and prior to communication with one another, the mobile units are synchronized in communication with an interface unit that is external with regard to the mobile units in that a codebook defining or specifying an encoder and a decoder is determined by the external interface unit, and is communicated to the mobile units.

### SUMMARY

It should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like.

It is an object of some embodiments to solve or mitigate, alleviate, or eliminate at least some of the above or other disadvantages.

A first aspect is a method of a transmitter node for conveying a message selected from a collection of messages to a receiver node. The method comprises mapping the message to a current codeword based on a previous codeword and based on a counter value, and transmitting the current codeword to convey the message to the receiver node as per the appended claims.

In some embodiments, the mapping for a specific message results in different current codewords for at least some differing previous codewords and/or for at least some differing counter values.

In some embodiments, the method further comprises updating the counter before the mapping step by adding a fixed update value to the counter, or adding a variable update value to the counter (wherein the variable update value is based on the message and a current counter value), or adding an update value to a first counter when the message is a first message and adding the update value to a second counter when the message is a second message.

In some embodiments, the method further comprises determining whether or not a size of the collection of messages exceeds a collection size threshold, wherein the steps of mapping the message to a current codeword and transmitting the current codeword are responsive to the size of the collection of messages not exceeding the collection size threshold.

In some embodiments, the method further comprises acquiring indication of one or more mapping parameters.

In some embodiments, the one or more mapping parameters comprise one or more of a shared secret, a collection of allowed codewords, a codeword length, an initial codeword, and an initial counter value.

In some embodiments, the transmitter node is configured to convey messages using a default communication protocol, in which physical layer packets comprise at least one of an address field, a header field and a data field. Transmitting the current codeword may comprise transmitting a physical layer packet comprising the current codeword.

In some embodiments, the method further comprises one or more of inserting the current codeword in the address field of the physical layer packet, leaving the data field of the physical layer packet empty, inserting a first part of the current codeword in the address field of the physical layer packet and a second part of the current codeword in the data field of the physical layer packet, inserting the current codeword in the data field of the physical layer packet, indicating codeword transmission by using a dedicated content of the address field of the physical layer packet, indicating codeword transmission by using an advertising packet type field of the header field of the physical layer packet, and indicating codeword transmission by using a tag value in the initial part of the data field of the physical layer packet.

In some embodiments, the default communication protocol is a Bluetooth protocol and/or a Bluetooth mesh protocol.

In some embodiments, the codewords are codewords of a block code.

A second aspect is a method of a receiver node for detecting a message selected from a collection of messages by a transmitter node. The method comprises mapping a candidate message from the collection of messages to a candidate codeword based on a previous codeword and based on a counter value, receiving a current codeword from the transmitter node, and detecting the candidate message when the current codeword coincides with the candidate codeword as per the appended claims.

In some embodiments, the mapping for a specific candidate message results in different candidate codewords for at least some differing previous codewords and/or for at least some differing counter values.

In some embodiments, the method further comprises updating the counter before the mapping step by adding a fixed update value to the counter, or adding a variable update value to the counter, wherein the variable update value is based on the candidate message and/or a current counter value, or adding an update value to a first counter when the candidate message is a first message and adding the update value to a second counter when the candidate message is a second message.

In some embodiments, the method further comprises determining whether or not a size of the collection of messages exceeds a collection size threshold, wherein the steps of mapping the candidate message to a candidate codeword, receiving the current codeword, and detecting the candidate message are responsive to the size of the collection of messages not exceeding the collection size threshold.

In some embodiments, the method further comprises acquiring indication of one or more mapping parameters.

In some embodiments, the receiver node is configured to detect messages using a default communication protocol, in which physical layer packets comprise at least one of an address field, a header field and a data field. Receiving the current codeword may comprise receiving a physical layer packet comprising the current codeword.

In some embodiments, the method further comprises one or more of extracting the current codeword from the address field of the physical layer packet, ignoring the data field of the physical layer packet, extracting a first part of the current codeword from the address field of the physical layer packet and a second part of the current codeword from the data field of the physical layer packet, extracting the current codeword from the data field of the physical layer packet, determining codeword transmission by detecting a dedicated content of the address field of the physical layer packet, determining codeword transmission by detecting an advertising packet type field of the header field of the physical layer packet, and determining codeword transmission by detecting a tag value in the initial part of the data field of the physical layer packet.

In some embodiments, the method further comprises relaying the detected message by transmission in accordance with the default communication protocol.

In some embodiments, mapping a candidate message from the collection of messages to a candidate codeword comprises mapping each candidate message from the collection of messages to a respective candidate codeword, and detecting the candidate message comprises selecting the respective candidate codeword that coincides with the current codeword.

In some embodiments, the method further comprises, when the current codeword does not coincide with the candidate codeword, mapping the candidate message from the collection of messages to an alternative candidate codeword based on an assumed lost codeword and based on a counter value for an assumed lost codeword, and detecting the candidate message when the current codeword coincides with the alternative candidate codeword.

A third aspect is a method of a provisioning node for controlling conveyance of a message selected from a collection of messages from a transmitter node to a receiver node. The method comprises providing, to the transmitter node and to the receiver node, information for mapping a message from the collection of messages to a current codeword based on a previous codeword and based on a counter value as per the appended claims.

In some embodiments, the method further comprises determining whether or not a size of the collection of messages exceeds a collection size threshold, wherein the step of providing is responsive to the size of the collection of messages not exceeding the collection size threshold.

In some embodiments, the information for mapping comprises indication of one or more mapping parameters.

A fourth aspect is a computer program product comprising a non-transitory computer readable medium, having thereon a computer program comprising program instructions. The computer program is loadable into a data processing unit and configured to cause execution of the method according to any of the first, second, and third aspects when the computer program is run by the data processing unit as per the appended claims.

A fifth aspect is an apparatus for a transmitter node, the apparatus being for conveyance - from the transmitter node to a receiver node - of a message selected from a collection of messages. The apparatus comprises controlling circuitry configured to cause mapping of the message to a current codeword based on a previous codeword and based on a counter value, and transmission of the current codeword to convey the message to the receiver node as per the appended claims.

A sixth aspect is an apparatus for a receiver node, the apparatus being for detection of a message selected from a collection of messages by a transmitter node. The apparatus comprises controlling circuitry configured to cause mapping of a candidate message from the collection of messages to a candidate codeword based on a previous codeword and based on a counter value, reception of a current codeword from the transmitter node, and detection of the candidate message responsive to the current codeword coinciding with the candidate codeword as per the appended claims.

A seventh aspect is an apparatus for a provisioning node, the apparatus being for control of conveyance of a message selected from a collection of messages from a transmitter node to a receiver node. The apparatus comprises controlling circuitry configured to cause provision, to the transmitter node and to the receiver node, of information for mapping a message from the collection of messages to a current codeword based on a previous codeword and based on a counter value.

An eighth aspect is a transmitter node comprising the apparatus of the fifth aspect.

A ninth aspect is a receiver node comprising the apparatus of the sixth aspect.

A tenth aspect is a wireless communication device comprising one or more of the apparatus of the fifth aspect and the apparatus of the sixth aspect.

An eleventh aspect is a provisioning node comprising the apparatus of the seventh aspect.

In some embodiments, any of the above aspects may additionally have features identical with or corresponding to any of the various features as explained above for any of the other aspects.

An advantage of some embodiments is that alternative approaches for conveying messages are provided.

An advantage of some embodiments is that approaches for overhead control (e.g., overhead reduction) are provided.

An advantage of some embodiments is that message conveyance approaches are provided which are suitable for devices operating under low power consumption requirements.

An advantage of some embodiments is that approaches for secure message conveyance are provided.

An advantage of some embodiments is that existing resources (e.g., hardware of the transmitter node and/or the receiver node) for processing according to a default communication protocol may be used for processing according to the proposed message conveyance approaches.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a pair of flowcharts illustrating example method steps according to some embodiments;
Figure 2 is a signaling diagram illustrating example signaling according to some embodiments;
Figure 3 is a schematic drawing illustrating an example physical layer packet according to some embodiments;
Figure 4 is a schematic drawing illustrating an example conveyance of a message between nodes of a communication setup according to some embodiments;
Figure 5 is a schematic block diagram illustrating an example apparatus according to some embodiments;
Figure 6 is a schematic block diagram illustrating an example apparatus according to some embodiments;
Figure 7 is a schematic block diagram illustrating an example apparatus according to some embodiments; and
Figure 8 is a schematic drawing illustrating an example computer readable medium according to some embodiments.

### DETAILED DESCRIPTION

As already mentioned above, it should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

It should be noted that, when power is referred to herein, corresponding statements are generally applicable also for energy; and vice versa.

It should also be noted that, even if the context of Bluetooth Mesh is used herein as an example default communication protocol, embodiments may be equally applicable in other contexts (e.g., contexts applying any suitable default communication protocol, such as IEEE802.11, 3GPP-advocated, and/or other Bluetooth communication).

Generally, the codewords referred to herein (e.g., the current codeword, the previous codeword, the candidate codeword, and the assumed lost codeword) may be codewords of a block code. For example, the codewords of the block code may represent a collection of allowed codewords.

In some embodiments, the collection of allowed codewords has a minimum mutual distance which exceeds a distance threshold value. The distance threshold value may, for example, depend on the codeword length and the number of allowed codewords. In some embodiments, the minimum mutual distance may be maximized conditioned on the codeword length and the number of allowed codewords.

In the following, embodiments will be described where alternative - secure - approaches for conveying messages are provided. Some embodiments enable overhead control (e.g., overhead reduction). Some embodiments are particularly suitable for devices operating under low power consumption requirements.

An example context which may be particularly suitable for some embodiments is Bluetooth Mesh. In fact, some embodiments provide a codeword procedure for very low energy consumption in Bluetooth Mesh.

Bluetooth Low Energy (BLE) and Bluetooth Mesh (building on BLE) are communication technologies developed for constrained devices. At the same time, BLE and Bluetooth Mesh have been designed to be applicable to a large set of use cases and applications; and to provide a level of security sufficient for such use cases and applications.

For example, constrained devices may have relatively low memory capabilities and/or relatively low computational capabilities. Alternatively or additionally, constrained devices often have relatively strict power consumption restrictions (e.g., being powered by a battery with limited capacity, e.g., a coin-cell battery, and/or being powered using energy harvesting). For Bluetooth Mesh, energy harvesting is considered as a technique that can facilitate devices to be operational for long time without any need of manual support or other management. Accordingly, BLE and Bluetooth Mesh have been designed considering energy efficiency, battery lifetime, etc.

One example of a Bluetooth Mesh device relying on energy harvesting as its energy source is a pushbutton switch for controlling a lamp (or other electronic equipment), wherein a piezoelectric element in the pushbutton may generate a tiny amount of energy. In a typical example, the generated energy should be enough to convey a message (e.g., ON/OFF) to a receiver device, wherein the receiver device controls the lamp accordingly. For conveying the message, energy is generally consumed in both the process of composing the message to and in the process of sending (transmitting) the message.

Generally, when default communication protocols are used to convey a message, it entails overhead bits added to the actual message. The shorter the message is (e.g., ON/OFF; representable by one information bit), the more dominant the overhead becomes. This may be problematic, especially for energy constrained devices since a relatively large amount of energy is consumed for generation and transmission of the overhead.

As an example, the message overhead expressed in bits in Bluetooth Mesh is summarized in the following table (compare with a short message, e.g., a message representable by one information bit). The overhead is expressed as number of bits in the table.

| **Layer** | **Overhead** |
|---|---|
| Model layer: (GenericOnOff Set): OnOff+TID | 15 |
| Access Layer: Opcode (Assuming a 2-octet SIG defined opcode) | 16 |
| Upper Transport Layer: TransMIC | 32 |
| Lower transport Layer: 0 + AKF+AID | 8 |
| Network Layer: IVI+NID+CTL+TTL+SEQ+SRC+DST+NetMIC | 104 |
| Bearer layer (Advertisement): Advertiser Device Address+AD Length+AD Type | 64 |
| Link Layer: Preamble+Advertising Access Address+Header+length+CRC | 80 |
| **Total** | **319** |

Furthermore, in Bluetooth Mesh, the 319 overhead bits are sent three times; once for each advertisement channel.

Thus, it is desirable to have alternative approaches for conveying a message. Preferably, such approaches should entail relatively low overhead while providing secure conveyance of the message.

According to some embodiments, a new (relatively small; compared to prior art approaches) protocol stack is provided, wherein messages are conveyed based on codewords. The new protocol stack may be seen as an extension to the default communication protocol of BLE and/or Bluetooth Mesh. By using message conveyance based on codeword, the overhead may be reduced, thereby reducing the energy consumption for conveying the message.

Thus, the transmitter node and the receiver node may communicate using a codeword based communications scheme (instead of conveying messages in accordance with the default communication protocol stack). Generally, the transmitter node and the receiver node may, or may not, also be capable of communicating using the default communication protocol stack; with each other and/or with one or more other nodes.

The transmitter node and the receiver node may agree on the codeword based communications scheme. The agreement may be explicit through signaling between the transmitter node and the receiver node, or implicit (e.g., using common information provided by a provisioning node; a provisioner). The agreement may be performed once or repeatedly (e.g., periodically, when a certain time has passed since the last agreement, when a certain number - e.g., all - of the codewords have been used, etc.). Typically, a higher security is achieved the more often a new agreement is performed.

For each message to be conveyed, the transmitter node creates a corresponding codeword, and the receiver node creates candidate codewords for a plurality of candidate messages using the same approach as the transmitter node. For example, an algorithm known to both the transmitter node and the receiver node may generate the current codeword based on a previous codeword and/or based on a common secret (e.g., a counter value). The codeword may be conveyed, for example, by inserting it into a physical layer packet of a default communication protocol (e.g., a BLE packet).

Approaches are also provided for keeping the transmitter node and the receiver node in synchronization, even if one or more messages (i.e., packets) are lost. For example, to be robust against lost packets, the receiver node may keep a buffer corresponding to more than one expected future packet receptions, and detect the message of an incoming packet based on the buffer content.

Hence, some embodiments provide approaches for shortening the physical layer packet length when conveying a message. Thereby, the transmitter duty cycle may be shortened and the energy consumption may be reduced (e.g., for some Bluetooth Mesh nodes).

The generic, multi-purpose message construction (supporting multi-hop communication) which is used in the default communication protocol of Bluetooth Mesh is complemented, or replaced, by a specific, single-purpose message construction (limited to single-hop communication). For a message with a destination node further away than a single hop, the receiver node of the single-purpose message may translate the specific, single-purpose message into a generic, multi-purpose message (or into another specific, single-purpose message agreed with another node) for further transmission.

The specific, single-purpose message construction is based on a codebook (a collection of allowed codewords), which is agreed on by the transmitter node and the receiver node. The specific, single-purpose message construction preferably entails short packet length. To protect the message conveyance against security threats (e.g., interception, impersonation, replay attacks, etc.) the codewords may be constructed using a pseudo-random algorithm, or any other approach wherein a specific message does not always result in the same codeword (e.g., any other approach wherein a specific message results in different codewords for different transmissions).

One advantage of some embodiments is that less energy is needed for conveying a message (resulting in longer battery life for a battery-powered node, and/or enabling an energy harvesting node to function even in situations when the harvested energy is less than needed to convey the message by the default communication protocol).

One advantage of some embodiments is that existing resources (e.g., hardware of the transmitter node and/or the receiver node) for processing according to the default communication protocol may be used also for processing of the codeword-based message conveyance.

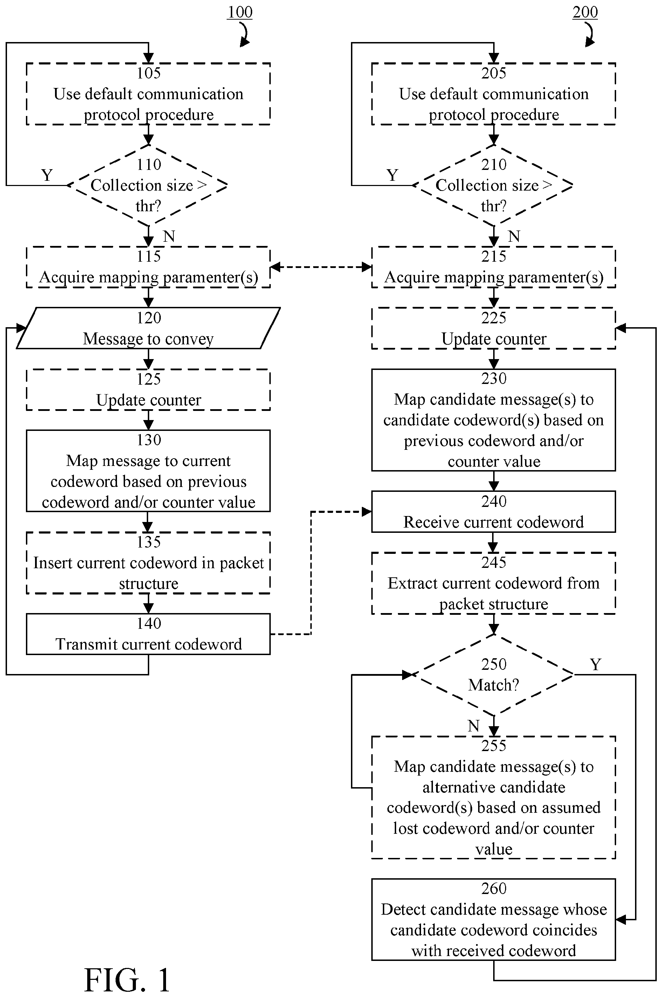

Figure 1 illustrates an example method 100 for a transmitter node and an example method 200 for a receiver node according to some embodiments. The method 100 is for conveying a message, selected from a collection of messages, from the transmitter node to the receiver node, and the method 200 is for detecting the message.

In some embodiments, the transmitter node and the receiver node are Bluetooth Low Energy (BLE) devices and/or are operating within a Bluetooth mesh network.

Step 120 illustrates that a (selected) message is provided at (e.g., to) the transmitter node for conveyance to the receiver node.

In step 130, the message is mapped to a current codeword based on a previous codeword and based on a counter value. The mapping may, generally, be accomplished by application of any suitable approach. For example, the mapping for a specific message may result in different current codewords for at least some differing previous codewords and/or for at least some differing counter values. Basing the mapping of a message on a previous codeword and based on a counter value has the advantage of increased security, since the same message is typically mapped to different codewords depending on where in a sequence of messages it is transmitted. This typically makes interception and/or impersonation more cumbersome, for example.

In step 140, the current codeword is transmitted to convey the message to the receiver node, and, in step 240, the current codeword is received by the receiver node.

As illustrated by step 230, the receiver node also performs a mapping procedure to enable detection of the message mapped to the current codeword. The mapping of the receiver node comprises mapping a candidate message from the collection of possible messages to a candidate codeword based on the previous codeword and based on the counter value. For example, the mapping may comprise mapping each candidate message from the collection of messages to a respective candidate codeword based on the previous codeword and based on the counter value.

Step 230 may be performed (as illustrated in Figure 1) before the current codeword is received, or in parallel to receiving the current codeword, or after the current codeword is received.

In step 260, a message is detected based on the received current codeword. Typically, message detection comprises selecting a candidate codeword (determined in the mapping process) that coincides with the received current codeword, and considering the corresponding candidate message as detected.

For example, the message to be conveyed may be provided to the transmitter in step 120 from an external message source. Alternatively or additionally, the message detected in step 260 may be provided to an external message sink. The message source and message sink may be any suitable appliances. An example include the message source being an input device (e.g., an ON/OFF switch) for controlling the message sink being a target device (e.g., a lamp or other ON/OFF-controlled device).

Optional step 250 illustrates the process of determining whether or not the current codeword coincides with any candidate codeword. When so (Y-path out of step 250), the corresponding candidate message may be considered as detected in step 260.

When the current codeword does not coincide with any candidate codeword (N-path out of step 250) the receiver node may perform additional mapping as illustrated by optional step 255. The additional mapping also maps candidate message(s) from the collection of messages to candidate codeword(s), but - instead of being based on the previous codeword and the counter value - the mapping in step 255 is based on an assumed lost codeword(s) and based on a counter value for an assumed lost codeword(s). Thus, the mapping of step 255 results in alternative candidate codeword(s).

In some embodiments, step 255 comprises performing mappings for several assumptions in parallel (e.g., one assumption that a single codeword is lost, one assumption that two codewords are lost, one assumption that three codewords are lost, etc.).

In some embodiments, step 255 is performed in parallel with step 230 instead of as illustrated in Figure 1.

In any case, taking the N-path out of step 250, the receiver node attempts to detect a message as elaborated on above, but using the alternative candidate codeword(s) instead. This is illustrated by the loopback to step 250 in Figure 1. The process may continue (with a varying number of assumed lost codeword(s)) until a message is detected, or until a stopping condition is reached. For example, the stopping condition may comprise a maximum number of attempts being reached.

The situation that the receiver is not able to detect a message from a received codeword may have one of several possible causes. Some example possible causes include that the message was not intended for this receiver, that the message originates from an attacker (who failed its attack), and that the receiver has gotten out of sync with the transmitter.

Considering the possibility of one or more codewords being lost increases the robustness of message conveyance. However, the security is reduced for each assumption that is considered (since the probability of successful impersonation increases).

As illustrated by optional steps 115 and 215, any of the methods 100 and 200 may further comprise acquiring (an indication of) one or more mapping parameters. These steps may be executed only once or repeatedly. Furthermore, the acquisition may be periodical and/or responsive to a triggering event. An example triggering event may be that a number of codeword transmissions (e.g., a number corresponding to the number of allowed codewords) have been made since the previous mapping parameter acquisition.

Acquiring one or more mapping parameters may comprise receiving (an indication of) one or more mapping parameters and/or determining one or more mapping parameters and/or retrieving one or more mapping parameters from storage circuitry. In one example, the transmitter node determines the mapping parameter(s) and transmits an indication thereof to the receiver node. In one example, the receiver node determines the mapping parameter(s) and transmits an indication thereof to the transmitter node. In one example, a provisioning node determines the mapping parameter(s) and transmits an indication thereof to the transmitter node and to the receiver node.

The acquisition of one or more mapping parameters in steps 115 and 215 may comprise explicit or implicit agreement between the transmitter node and the receiver node regarding the mapping parameter(s).

For explicit agreement, one of the nodes may send a CODE_WORD_REQUEST message to the other node, which may respond with a CODE_WORD_REPLY message. The CODE_WORD_REQUEST message may, for example, comprise a codeword initialization vector (CIV) to be used by both nodes for creating codewords. The CODE_WORD_REPLY message may, for example, comprise a STATUS field indicating whether or not the CODE_WORD_REQUEST is accepted. The CODE_WORD_REQUEST message and/or the CODE_WORD_REPLY message may be sent over an encrypted channel.

For implicit agreement, transmitter node and the receiver node may not need to perform any agreement signaling between them. Mapping parameter(s) may, for example, be provided by a provisioning node (e.g., a provisioner for Bluetooth Mesh). Alternatively or additionally, one or more of the mapping parameter(s) may be set to a default value (e.g., a counter kept by a node may be set to a default value, such as zero, when the node is provisioned).

Example mapping parameters include any suitable shared secret, an algorithm selection index, a collection of allowed codewords, a codeword length, an initial codeword, and an initial counter value. The mapping parameter(s) may be used as input material for codeword generation (mapping from message to codeword) at the transmitter node and the receiver node.

As illustrated by optional steps 105 and 205, the transmitter node may be configured to convey messages using a default communication protocol and the receiver node may be configured to detect messages using the default communication protocol. For example, the default communication protocol may be a Bluetooth protocol and/or a Bluetooth mesh protocol.

The default communication protocol may stipulate the message to be converted from a message layer representation to a physical layer data field representation by addition of a plurality of overhead symbols, while the codeword approach entails less overhead symbols.

In some embodiments, the physical layer packet structure of the default communication protocol may be utilized to transmit the current codeword. This has the advantage that some parts (e.g., processing hardware) of the transmitter node and the receiver node which are configured for communication according to the default communication protocol, may be used also for the codeword-based communication presented herein.

Thus, as illustrated by optional steps 135 and 245, the current codeword may be inserted into the packet structure of the default communication protocol by the transmitter node and the current codeword may be extracted from the packet structure of the default communication protocol by the receiver node.

For example, a physical layer packet of the default communication protocol may comprise at least one of an address field, a header field and a data field.

In one example, the current codeword is inserted in the address field of the physical layer packet. The data field of the physical layer packet may (or may not) be left empty.

In one example, the current codeword is inserted in the data field of the physical layer packet.

In one example, a first part of the current codeword is inserted in the address field of the physical layer packet and a second part of the current codeword is inserted in the data field of the physical layer packet.

When inserting (part of) the codeword in the address field of the physical layer packet, it is beneficial to avoid (part of) codewords that correspond to an actual address used for the default communication protocol.

To enable the receiver node to determine codeword transmission (i.e., distinguish a physical layer packet comprising a codeword from other physical layer packet according to the default communication protocol), codeword transmission may be indicated in the physical layer packet.

In one example, codeword transmission is indicated by using a dedicated content of the address field of the physical layer packet.

In one example, codeword transmission is indicated by using an advertising packet type field of the header field of the physical layer packet.

In one example, codeword transmission is indicated by using a tag value in the initial part of the data field of the physical layer packet.

Generally, any of the indicating examples may be combined with any of the codeword insertion examples, as suitable. Particularly, all of the indicating examples may be combined with the example where the current codeword is inserted in the data field of the physical layer packet.

In some embodiments, the codeword transmission approach is only used for relatively small message spaces (i.e., when there are a limited number of messages to convey; an example is a message space consisting of the messages "ON" and "OFF").

This is illustrated by optional steps 110 and 210 in Figure 1, where it is determined whether or not a size of the collection of messages exceeds a collection size threshold (thr). When so (Y-path out of steps 110 and 210), communication is performed using the default communication protocol as illustrated by steps 105 and 205. When the size of the collection of messages does not exceed the collection size threshold (N-path out of steps 110 and 210), the codeword procedures exemplified above are applied.

As mentioned before, the mapping of a message to a codeword (e.g., in one or more of steps 130, 230, 255) based on a previous codeword and based on a counter value may, generally, be accomplished by application of any suitable approach. Generally, the mapping of steps 130, 230, 255 uses the same mapping approach.

When the mapping is based on a counter value, the methods 100 and/or 200 of Figure 1 may comprise updating the counter before the mapping step as illustrated by optional steps 125 and 225.

Updating the counter may, for example, comprise adding a fixed update value (e.g., an increment, such as "+1" or "+a", or a decrement, such as "-1" or "-a") to the counter or adding a variable update value to the counter (wherein the variable update value may be based on the message and the current counter value).

In the case of a variable update value, an example may comprise applying a first increment, such as "+1", for a first message, a second increment, such as "+2", for a second message, etc. Alternatively or additionally, a remainder of the current counter value divide by the number of possible messages may be used as the variable update value.

Alternatively or additionally, there may be more than one counter (e.g., *n* counters) and updating the counters may, for example, comprise adding an update value (typically a fixed update value as exemplified above) to a first counter when the message is a first message, adding the update value to a second counter when the message is a second message, adding the update value to a third counter when the message is a third message, etc. This approach, typically in combination with suitable counter initiation, may be applied to divide the counter value space into two or more subspace and use each subspace for a corresponding message.

A few examples for the mapping of a message to a codeword (e.g., in one or more of steps 130, 230, 255) will now be given.

### Variable input material codeword mapping

In this approach, codewords may be generated by an algorithm which uses a number of input elements, termed herein as the input material (e.g., mapping parameter(s)). The input material is shared by the transmitter node and the receiver node (e.g., as explained for steps 115, 215).

Generally, some of the input material may be static or semi-static, and some of the input material may be variable (e.g., may change for each codeword transmission). Example (semi)-static input material includes node addresses, keys, and initialization vectors. Example variable input material includes one or more counter values and/or the message itself (the latter is not applicable for the example below).

For example, a single counter may be used, which is incremented by the transmitter node (step 125) in the process of codeword transmission and is incremented by the receiver node (step 225) when a received codeword is successfully verified.

An example algorithm for generating the codeword (mapping) may be based on encrypting a single counter value using a key based on the input material, for example: 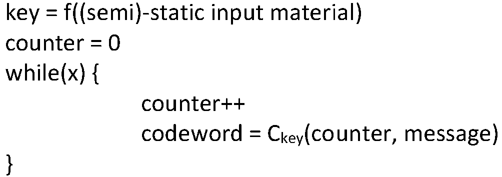 where x denotes a stopping criterion (e.g., for triggering acquisition of new mapping parameter(s).

An example algorithm for generating the codeword (mapping) without a counter may be based on encrypting the previous codeword using a key based on the input material, for example:

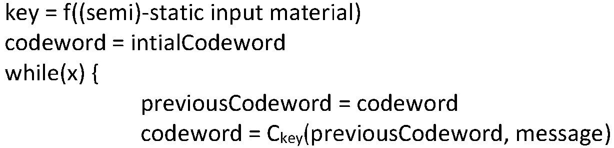

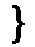

### Division-remainder codeword mapping

In one example approach for designing codewords, a counter value may be used as message identifier.

For example, when there are two possible messages (e.g., ON/OFF), even counter numbers may denote one of the messages and odd counter numbers may denote the other message. This can be generalized to any number of messages by division of the counter value by the number of possible messages k, and letting the remainder indicate the message (e.g., by using the remainder as a counter increment). An example algorithm for this approach is:

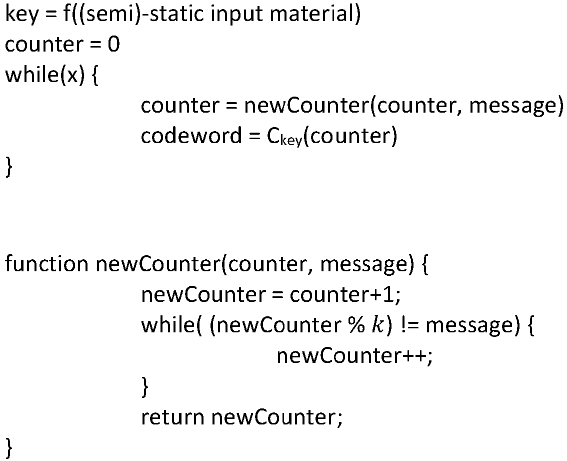

### Counter space split codeword mapping

In one example approach for designing codewords, the counter value may be used as message identifier (as for the previous example approach).

In this example approach, the counter value space is split into sub-spaces, wherein each sub-space identifies a message (the previous example approach may be seen as an exemplification of this approach; e.g., one sub-space consisting of even counter numbers and one sub-space consisting of odd counter numbers).

One way to split the counter value space into sub-spaces may be exemplified by assuming that the number of possible messages is ***k,*** and the counter value is i bits long (i.e., a counter wraps to zero after counter value 2*ⁱ* - 1). Then, the counter space for a first message may be counter values [0 ... *k*⁻¹2*ⁱ* - 1], the counter space for a second message may be counter values [*k*⁻¹2*ⁱ ...* 2*k*⁻¹2*ⁱ -* 1], and so on until the counter space for a *k^{th}* message may be counter values [(k - 1)*k*⁻¹2*ⁱ* ... 2*ⁱ* - 1]. For example, if there are two possible messages (e.g., ON/OFF), one of the messages can be represented using counter values that start with 0 and the other message can be represented using counter values that start with 2^{*i*-1}. The transmitter node and the receiver node may agree on the counter value sub-spaces (e.g., by agreeing on the starting counter values).

Each of the transmitter node and the receiver node may keep k counters; one for each possible message. For each message, the corresponding counter is incremented.

If one of the messages is conveyed more often than the other message(s), the counter value sub-spaces may have different size. Alternatively or additionally, the counter corresponding to a less often conveyed message may have larger increments to make it run at a similar pace as the counter corresponding to a more often conveyed message. The increment values may change dynamically over time (e.g., to accommodate a situation where one message occurs more often some times, and less often at other times).

Referring again to Figure 1, the methods 100, 200 may be repeated for several messages as illustrated by loop-backs from step 140 to step 120 and from 260 to 225.

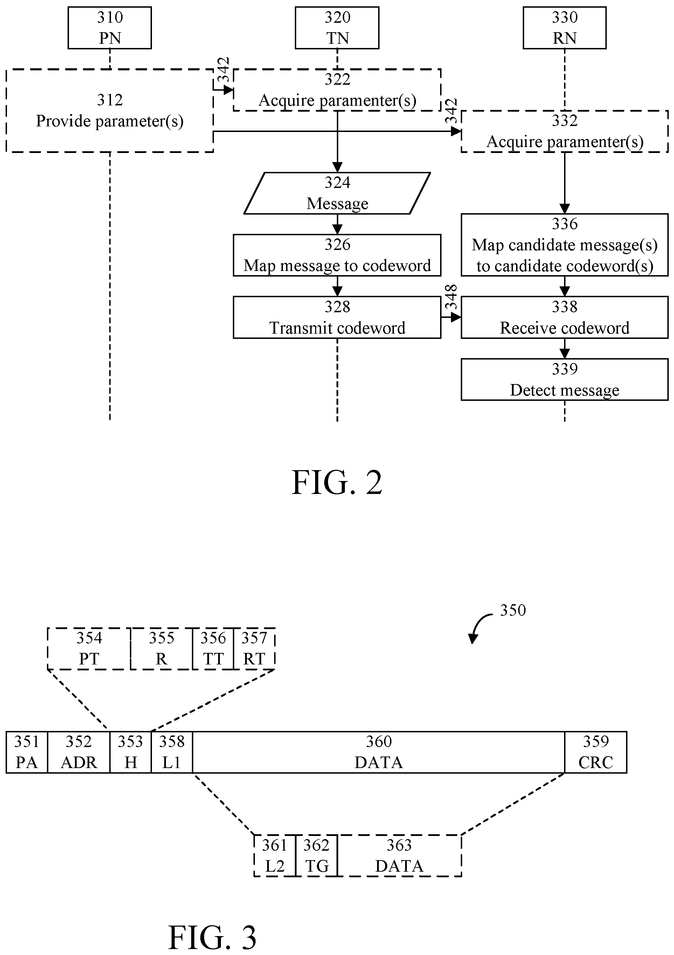

Figure 2 illustrates example signaling between a provisioning node (PN) 310, a transmitter node (TN) 320 and a receiver node (RN) 330 according to some embodiments.

In this example, the provisioning node controls conveyance of a message (selected from a collection of messages) from a transmitter node to a receiver node.

As illustrated by 312, this may be achieved by providing information 342 for mapping the message from the collection of messages to a current codeword based on a previous codeword and based on a counter value, wherein the information for mapping may comprise one or more mapping parameters as exemplified above in connection with Figure 1. The information for mapping is provided for acquisition by the transmitter node and by the receiver node as illustrated by 322 and 332 (compare with 115 and 215 of Figure 1).

In correspondence to steps 110 and 210 of Figure 1, the provisioning node may, in some embodiments, determine whether or not a size of the collection of messages exceeds a collection size threshold, and provide the information 342 responsive to the size of the collection of messages not exceeding the collection size threshold.

When there is a message to transmit, as illustrated by 324 (compare with 120 of Figure 1), the transmitter node maps the message to a current codeword, as illustrated by 326 (compare with 130 of Figure 1), and transmits the current codeword 348 to the receiver node, as illustrated by 328 (compare with 140 of Figure 1).

The receiver node maps candidate message(s) to candidate codeword(s), as illustrated by 336 (compare with 230, 255 of Figure 1), receives the current codeword 348 from the transmitter node, as illustrated by 338 (compare with 240 of Figure 1), and detects the message by comparing the received current codeword to the candidate codeword(s), as illustrated by 339 (compare with 250, 260 of Figure 1).

Figure 3 schematically illustrates an example physical layer packet 350 according to some embodiments. For example, the physical layer packet 350 may be of a default communication protocol, such as a Bluetooth protocol and/or a Bluetooth mesh protocol. The term "Bluetooth protocol" will be used in the following to denote any protocol for Bluetooth Mesh and/or for other Bluetooth applications such as BLE.

The example physical layer packet 350 comprises an address field (ADR; e.g., an access address field) 352, a header field (H) 353, and a data field (DATA) 360. The example physical layer packet 350 also comprises a preamble (PA) 351, a length field (L1) 358, and a cyclic redundancy check field (CRC) 359.

In a typical Bluetooth protocol packet, the preamble consists of 8 bits, the address field consists of 32 bits, the header field consists of 8 bits, the length field consists of 8 bits, the data field consists of 0-296 bits, and the CRC field consists of 24 bits.

In one example, the current codeword is inserted in the address field 352 and the data field 360 is left empty (i.e., consists of 0 bits). In this example, the use of address field content that does not correspond to an actual address used for the default communication protocol may serve as an indication of codeword transmission.

When this example is used in the Bluetooth context, the 32-bit Access Address field is used for holding a codeword instead of an Access Address, and the packet is 80 bits long (the data field is not used and typically has zero length). It may be beneficial to ensure that a codeword cannot be confused with an Access Address. Design of the Access Address according to the Bluetooth context limits the number of possible Access Address to about two thirds of the full 32-bit address field space, so one third of the address field space is available as codewords.

In some applications it may be difficult to completely avoid that a codeword has the value of a permitted Access Address. However, Bluetooth Mesh is special since it utilizes the advertising channels, where a single Access Address is used for all packets. Hence, when the advertising channels are used, it is only needed to avoid this single Access Address.

In situations where it is not possible to completely avoid that a codeword has the value of a permitted Access Address, embodiments may still be functional (typically better the lower the probability is that a codeword which accidentally coincides with a permitted Access Address). This is because there may be other mechanisms that prevent mix up between a packet sent using a permitted Access Address and a packet sent with a codeword which accidentally coincides with a permitted Access Address. For example, there may be requirements that a packet sent for a connection using a permitted Access Address must arrive at the receiver on a specified channel at a specified time. Alternatively or additionally, a packet sent with a codeword which accidentally coincides with a permitted Access Address will typically not pass an integrity check.

In one example, a first part of the current codeword is inserted in the address field 352 and a second part of the current codeword is inserted in the data field 360. This example is particularly applicable when the codeword is longer than the address field. In this example, the use of address field content that does not correspond to an actual address used for the default communication protocol may serve as an indication of codeword transmission.

When this example is used in the Bluetooth context, the 32-bit Access Address field is used for holding a first codeword part (having m ≤ 32 bits) instead of an Access Address, and the packet is 80 + (*n* - *m*) bits long (where *n* is the codeword length). As for the previous example, it may be beneficial to ensure that a codeword cannot be confused with an Access Address. Design of the Access Address according to the Bluetooth context limits the number of possible Access Address to about two thirds of the full 32-bit address field space, so one third of the address field space is available as first codeword parts.

In one example, the current codeword is inserted in the data field 360. In this example, codeword transmission may be indicated in the header (H) 353, for example in a packet type field (PT) 354 of the header (which may further comprise a reserved field (R) 355, a transmitter address type field (TT) 356, and a receiver address type field (RT) 357). Alternatively or additionally, codeword transmission may be indicated in the beginning of the data field 360, for example by using a length indicator (L2) 361 for the codeword and/or a tag (TG) 362 followed by the rest of the data field (DATA) 363 comprising the codeword. The length indicator may consist of 8 bits and the tag may consist of 8-24 bits, for example. Yet alternatively or additionally, codeword transmission may be indicated by using a therefore dedicated content of the address field (ADR) 352.

When this example is used in the Bluetooth context, one approach is to use a BLE Mesh advertisement for inserting the codeword.

In this case, the Advertising Address (compare with the address field 352) may be fixed to certain value (e.g., the default address for BLE Advertisement - 0x8E89BED6, or another address for codeword-based messaging), and codeword-based messaging may be indicated by the address for codeword-based messaging and/or by a new Advertising Packet Type in the header field (compare with the packet type field 354; which may be an advertising packet field for BLE Mesh advertisement). The packet is 80 + *n* bits long (where *n* is the codeword length).

Alternatively or additionally in this case, the Advertising Address (compare with the address field 352) may be fixed to certain value (e.g., the default address for BLE Advertisement - 0x8E89BED6, another address for codeword-based messaging, or a normal access address value), and codeword-based messaging may be indicated by the address for codeword-based messaging and/or in the data field 360. An existing Advertising Packet Type may be used (compare with the packet type field 354; which may be an advertising packet field for BLE Mesh advertisement). When codeword-based messaging is indicated in the data field 360, a new Length-Tag-Value may be applied in the data field (compare with the length indicator 361 and the tag 362). The packet is 80 + 8 + *l* + *n* bits long (where *n* is the codeword length, and *l* is the length of the tag).

Generally, the size (length) of the codewords is a compromise between security and energy consumption (relatively long codewords typically correspond to relatively higher security and/or relatively high energy consumption). For example, using relatively short codewords may increase the risk of collisions with codewords used by other nodes.

Furthermore, the codeword size may be limited by the size of the field of a default communication protocol that should be used to insert the codeword. For example, the codeword limited to a maximum of 32 bits when it is to be inserted in the Access Address field of a Bluetooth packet.

The following table illustrates, for a selection of example embodiments, the packet size (in bits and relative to a generic packet) when conveying a message representable by one bit (e.g., ON/OFF) using a codeword (CW) in a Bluetooth Mesh context:

| | Size | Relative |
|---|---|---|
| GenericOnOff Model (Baseline - see previous table) | 319 | 100% |
| CW in Access Address field | 80 | 25% |
| CW part in Access Address field + 32-bit CW part in Data field | 112 | 32% |
| BLE Mesh advertisement, 32-bit CW in Data field | 112 | 32% |
| BLE Mesh advertisement, 48-bit CW in Data field | 128 | 37% |
| BLE Mesh advertisement, 64-bit CW in Data field | 144 | 42% |
| New Length-Tag-Value. 8-bit tag. 32-bit CW in Data field | 128 | 40% |
| New Length-Tag-Value. 8-bit tag. 48-bit CW in Data field | 144 | 45% |
| New Length-Tag-Value. 8-bit tag. 64-bit CW in Data field | 160 | 50% |

Continuing the example context of Bluetooth Mesh, codeword-based message conveyance typically needs to handle the following protocol functions: receiver synchronization, protocol discrimination, message integrity, message confidentiality, addressing, replay protection, and time-to-live handling.

Receiver synchronization may be performed in the same way as for default BLE messaging; using the preamble PA (351).

Protocol discrimination may be performed by a statistical approach. Codeword-based message conveyance entails a relatively small number of protocol options (e.g., for messages ON/OFF). Discriminating them from other messages may be achieved by the involved nodes agreeing on a list of allowed codewords (which is small compared to the entire packet space).

Message integrity may be performed by the same means as protocol discrimination.

Message confidentiality may be achieved by the involved nodes agreeing (e.g., implicitly, or using encrypted messages) on the meaning of the codewords, i.e., which message a codeword corresponds to. This is generally not a one-to-one mapping from message to codeword, but the mapping depends on one or more (varying) parameter, such that a specific message may be mapped to different codewords depending on the parameter value.

Addressing may be performed by a statistical approach. Only agreed codewords are considered valid.

Replay protection may be performed by the receiver node having a buffer (e.g., implementing a sliding window) of expected possible codewords. The buffer length may be limited by memory availability and/or computational resource availability of the receiver node. Furthermore, the buffer length may be a trade-off between the ability to accommodate packet losses and security (e.g., a long buffer increases the risk of successful impersonation).

Time-to-live handling may be not relevant in codeword-based message conveyance, since such messages are typically not relayed. When messages are relayed by transformation into a default communication protocol packet, the default communication protocol packet may be associated with a time-to-live value, as suitable.

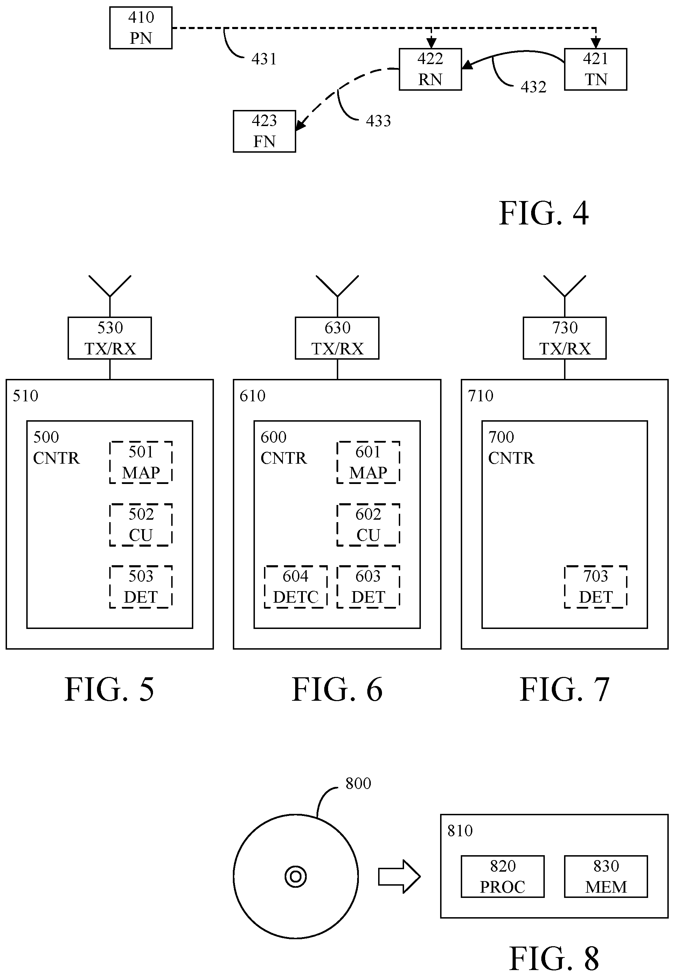

Figure 4 schematically illustrates an example conveyance of a message between nodes of a communication setup according to some embodiments. The communication setup may, for example, be a Bluetooth mesh.

The communication setup comprises a provisioning node (PN) 410 (compare with 310 of Figure 2), a transmitter node (TN) 421 (compare with 320 of Figure 2), a receiver node (RN) 422 (compare with 330 of Figure 2), and one or more further node (FN) 423.

The provisioning node 410 may be configured to control conveyance of a message by providing mapping information 431 to the transmitter node 421 and to the receiver node 422 as exemplified earlier herein (e.g., by performing action 312 of Figure 2).

The transmitter node 421 may be configured to transmit a current codeword 432 to the receiver node 422 as exemplified earlier herein (e.g., by performing one or more steps of the example method 100, and/or by performing actions 324, 326, 328 of Figure 2).

The receiver node 422 may be configured to receive the current codeword 432 from the transmitter node 421 and detect the message as exemplified earlier herein (e.g., by performing one or more steps of the example method 200, and/or by performing actions 336, 338, 339 of Figure 2).

If the message is intended for a further node the receiver node 422 may be configured to relay the detected message to the further node (possibly via one or more other further nodes) by transmission 423 in accordance with the default communication protocol.

Figure 5 schematically illustrates an example apparatus 510 according to some embodiments. The apparatus is for a transmitter node (compare with 320, 421). The apparatus is for conveyance - from the transmitter node to a receiver node - of a message selected from a collection of messages. For example, the apparatus may be configured to cause performance of (e.g., perform) one or more of the steps described in connection to the method 100 and/or one or more of the actions 324, 326, 328 of Figure 2). The apparatus 510 comprises a controller (CNTR; e.g., controlling circuitry or a control module) 500.

The controller is configured to cause mapping of the message to a current codeword based on a previous codeword and based on a counter value (compare with step 130 of Figure 1). To this end, the controller may comprise, or be otherwise associated with (e.g., connectable, or connected, to) a mapper (MAP; e.g., mapping circuitry or a mapping module) 501. The mapper may be configured to map the message to the current codeword based on a previous codeword and based on a counter value.

The controller is configured to cause transmission of the current codeword to convey the message to the receiver node (compare with step 140 of Figure 1); e.g., by transmission of a default communication protocol physical layer packet comprising the current codeword. To this end, the controller may comprise, or be otherwise associated with (e.g., connectable, or connected, to) a transmitter (e.g., transmitting circuitry or a transmission module), illustrated in Figure 5 as part of a transceiver (TX/RX) 530. The transmitter may be configured to transmit the current codeword.

The controller may be configured to cause updating of the counter before the mapping (compare with step 125 of Figure 1). To this end, the controller may comprise, or be otherwise associated with (e.g., connectable, or connected, to) a counter updater (CU; e.g., counter updating circuitry or a counter update module) 502. The counter updater may be configured to maintain and update one or more counters as exemplified herein.

The controller may be configured to cause determination of whether or not a size of the collection of messages exceeds a collection size threshold (compare with step 110 of Figure 1). To this end, the controller may comprise, or be otherwise associated with (e.g., connectable, or connected, to) a determiner (DET; e.g., determining circuitry or a determination module) 503. The determiner may be configured to determine whether or not a size of the collection of messages exceeds a collection size threshold and trigger codeword transmission responsive to the size of the collection of messages not exceeding the collection size threshold.

The controller may be configured to cause acquisition of one or more mapping parameters (compare with step 115 of Figure 1). To this end, the controller may comprise, or be otherwise associated with (e.g., connectable, or connected, to) a receiver (e.g., receiving circuitry or a reception module), illustrated in Figure 5 as part of the transceiver 530. The receiver may be configured to receive indication of one or more mapping parameters. Alternatively or additionally, the controller may comprise, or be otherwise associated with (e.g., connectable, or connected, to) a memory (e.g., storing circuitry or a memory module), not shown in Figure 5. The memory may be configured to provide indication of one or more mapping parameters when parsed. Yet alternatively or additionally, the controller may comprise, or be otherwise associated with (e.g., connectable, or connected, to) a parameter determiner (e.g., parameter determining circuitry or a parameter determination module), not shown in Figure 5. The parameter determiner may be configured to determine one or more mapping parameters.

Figure 6 schematically illustrates an example apparatus 610 according to some embodiments. The apparatus is for a receiver node (compare with 330, 422). The apparatus is for detection of a message selected from a collection of messages by a transmitter node. For example, the apparatus may be configured to cause performance of (e.g., perform) one or more of the steps described in connection to the method 200 and/or one or more of the actions 326, 338, 339 of Figure 2). The apparatus 610 comprises a controller (CNTR; e.g., controlling circuitry or a control module) 600.

The controller is configured to cause mapping of a candidate message from the collection of messages to a candidate codeword based on a previous codeword and based on a counter value (compare with step 230 of Figure 1) and/or mapping of a candidate message from the collection of messages to an alternative candidate codeword based on an assumed lost codeword and based on a counter value of an assumed lost codeword (compare with step 255 of Figure 1). To this end, the controller may comprise, or be otherwise associated with (e.g., connectable, or connected, to) a mapper (MAP; e.g., mapping circuitry or a mapping module) 601. The mapper may be configured to map the candidate message to the candidate codeword.

The controller is configured to cause reception of a current codeword from the transmitter node (compare with step 240 of Figure 1); e.g., by reception of a default communication protocol physical layer packet comprising the current codeword. To this end, the controller may comprise, or be otherwise associated with (e.g., connectable, or connected, to) a receiver (e.g., receiving circuitry or a reception module), illustrated in Figure 6 as part of a transceiver (TX/RX) 630. The receiver may be configured to receive the current codeword.

The controller is configured to cause detection of a candidate message responsive to the current codeword coinciding with the corresponding candidate codeword (compare with steps 250 and 260 of Figure 1). To this end, the controller may comprise, or be otherwise associated with (e.g., connectable, or connected, to) a detector (DETC; e.g., detecting circuitry or a detection module) 604. The detector may be configured to detect the message.

The controller may be configured to cause updating of the counter before the mapping (compare with step 225 of Figure 1). To this end, the controller may comprise, or be otherwise associated with (e.g., connectable, or connected, to) a counter updater (CU; e.g., counter updating circuitry or a counter update module) 602. The counter updater may be configured to maintain and update one or more counters as exemplified herein.

The controller may be configured to cause determination of whether or not a size of the collection of messages exceeds a collection size threshold (compare with step 210 of Figure 1). To this end, the controller may comprise, or be otherwise associated with (e.g., connectable, or connected, to) a determiner (DET; e.g., determining circuitry or a determination module) 603. The determiner may be configured to determine whether or not a size of the collection of messages exceeds a collection size threshold and trigger codeword reception responsive to the size of the collection of messages not exceeding the collection size threshold.

The controller may be configured to cause acquisition of one or more mapping parameters (compare with step 215 of Figure 1). To this end, the controller may comprise, or be otherwise associated with (e.g., connectable, or connected, to) a receiver (e.g., receiving circuitry or a reception module), illustrated in Figure 6 as part of the transceiver 630. The receiver may be configured to receive indication of one or more mapping parameters. Alternatively or additionally, the controller may comprise, or be otherwise associated with (e.g., connectable, or connected, to) a memory (e.g., storing circuitry or a memory module), not shown in Figure 6. The memory may be configured to provide indication of one or more mapping parameters when parsed. Yet alternatively or additionally, the controller may comprise, or be otherwise associated with (e.g., connectable, or connected, to) a parameter determiner (e.g., parameter determining circuitry or a parameter determination module), not shown in Figure 6. The parameter determiner may be configured to determine one or more mapping parameters.

Figure 7 schematically illustrates an example apparatus 710 according to some embodiments. The apparatus is for a provisioning node (compare with 310). The apparatus is for control of conveyance of a message selected from a collection of messages from a transmitter node to a receiver node. For example, the apparatus may be configured to cause performance of (e.g., perform) the action 312 of Figure 2). The apparatus 710 comprises a controller (CNTR; e.g., controlling circuitry or a control module) 700.

The controller is configured to cause provision, to the transmitter node and to the receiver node, of information (e.g., mapping parameter(s)) for mapping a message from the collection of messages to a current codeword based on a previous codeword and based on a counter value. To this end, the controller may comprise, or be otherwise associated with (e.g., connectable, or connected, to) a transmitter (e.g., transmitting circuitry or a transmission module), illustrated in Figure 7 as part of a transceiver 730. The transmitter may be configured to provide indication of one or more mapping parameters.

The controller may be configured to cause determination of whether or not a size of the collection of messages exceeds a collection size threshold. To this end, the controller may comprise, or be otherwise associated with (e.g., connectable, or connected, to) a determiner (DET; e.g., determining circuitry or a determination module) 703. The determiner may be configured to determine whether or not a size of the collection of messages exceeds a collection size threshold and trigger codeword communication responsive to the size of the collection of messages not exceeding the collection size threshold.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as transmitter node, a receiver node, or a provisioning node.

Embodiments may appear within an electronic apparatus (such as transmitter node, a receiver node, or a provisioning node) comprising arrangements, circuitry, and/or logic according to any of the embodiments described herein. Alternatively or additionally, an electronic apparatus (such as transmitter node, a receiver node, or a provisioning node) may be configured to perform methods according to any of the embodiments described herein.

According to some embodiments, a computer program product comprises a tangible, or non-tangible, computer readable medium such as, for example a universal serial bus (USB) memory, a plug-in card, an embedded drive or a read only memory (ROM). Figure 8 illustrates an example computer readable medium in the form of a compact disc (CD) ROM 800. The computer readable medium has stored thereon a computer program comprising program instructions. The computer program is loadable into a data processor (PROC; e.g., data processing circuitry or a data processing unit) 820, which may, for example, be comprised in transmitter node, a receiver node, or a provisioning node 810. When loaded into the data processor, the computer program may be stored in a memory (MEM) 830 associated with or comprised in the data processor. According to some embodiments, the computer program may, when loaded into and run by the data processor, cause execution of method steps according to, for example, any of the methods illustrated in Figures 1 and 2, or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method of a transmitter node for conveying a message selected from a collection of messages to a receiver node, the method comprising:
updating (125) a counter value and then;
mapping (130, 324) the message to a current codeword based on a previous codeword and based on the counter value; and
transmitting (140, 328) the current codeword to convey the message to the receiver node.

2. The method of claim 1, wherein the mapping for a specific message results in different current codewords for at least some differing previous codewords and/or for at least some differing counter values.

3. The method of any of claims 1 through 2, further comprising updating (125) the counter before the mapping step by:
adding a fixed update value to the counter; or
adding a variable update value to the counter, wherein the variable update value is based on the message and/or a current counter value; or
adding an update value to a first counter when the message is a first message, and adding the update value to a second counter when the message is a second message.

4. The method of any of claims 1 through 3, further comprising:
determining (110) whether or not a size of the collection of messages exceeds a collection size threshold, wherein the steps of mapping (130) the message to a current codeword and transmitting (140) the current codeword are responsive to the size of the collection of messages not exceeding the collection size threshold.

5. The method of any of claims 1 through 4, further comprising acquiring (115, 322) indication of one or more mapping parameters.

6. The method of claim 5, wherein the one or more mapping parameters comprise one or more of:
a shared secret;
a collection of allowed codewords;
a codeword length;
an initial codeword; and
an initial counter value.

7. The method of any of claims 1 through 6, wherein the transmitter node is configured to convey messages using (105) a default communication protocol, in which physical layer packets comprise at least one of: an address field, a header field and a data field, and wherein transmitting (140) the current codeword comprises transmitting a physical layer packet comprising the current codeword.

8. The method of claim 7, further comprising one or more of:
inserting (135) the current codeword in the address field of the physical layer packet;
leaving the data field of the physical layer packet empty;
inserting (135) a first part of the current codeword in the address field of the physical layer packet and a second part of the current codeword in the data field of the physical layer packet;
inserting (135) the current codeword in the data field of the physical layer packet;
indicating codeword transmission by using a dedicated content of the address field of the physical layer packet;
indicating codeword transmission by using an advertising packet type field of the header field of the physical layer packet; and
indicating codeword transmission by using a tag value in the initial part of the data field of the physical layer packet.

9. The method of any of claims 7 through 8, wherein the default communication protocol is a Bluetooth protocol and/or a Bluetooth mesh protocol.

10. A method of a receiver node for detecting a message selected from a collection of messages by a transmitter node, the method comprising:
updating (125) a counter value and then;
mapping (230, 336) a candidate message from the collection of messages to a candidate codeword based on a previous codeword and based on the counter value;
receiving (240, 338) a current codeword from the transmitter node; and
detecting (260, 339) the candidate message when (250) the current codeword coincides with the candidate codeword.

11. The method of claim 10, wherein the mapping for a specific candidate message results in different candidate codewords for at least some differing previous codewords and/or for at least some differing counter values.

12. The method of any of claims 10 through 11, further comprising updating (225) the counter before the mapping step by:
adding a fixed update value to the counter; or
adding a variable update value to the counter, wherein the variable update value is based on the candidate message and a current counter value; or
adding an update value to a first counter when the candidate message is a first message, and adding the update value to a second counter when the candidate message is a second message.

13. The method of any of claims 10 through 12, further comprising:
determining (210) whether or not a size of the collection of messages exceeds a collection size threshold, wherein the steps of mapping (230) the candidate message to a candidate codeword, receiving (240) the current codeword, and detecting (260) the candidate message are responsive to the size of the collection of messages not exceeding the collection size threshold.

14. The method of any of claims 10 through 13, further comprising acquiring (215, 332) indication of one or more mapping parameters.

15. The method of claim 14, wherein the one or more mapping parameters comprise one or more of:
a shared secret;
a collection of allowed codewords;
a codeword length;
an initial codeword; and
an initial counter value.

16. The method of any of claims 10 through 15, wherein the receiver node is configured to detect messages using a default communication protocol, in which physical layer packets comprise at least one of: an address field, a header field and a data field, and
wherein receiving the current codeword comprises receiving a physical layer packet comprising the current codeword.

17. The method of claim 16, further comprising one or more of:
extracting (245) the current codeword from the address field of the physical layer packet;
ignoring the data field of the physical layer packet;
extracting (245) a first part of the current codeword from the address field of the physical layer packet and a second part of the current codeword from the data field of the physical layer packet;
extracting (245) the current codeword from the data field of the physical layer packet;
determining codeword transmission by detecting a dedicated content of the address field of the physical layer packet;
determining codeword transmission by detecting an advertising packet type field of the header field of the physical layer packet; and
determining codeword transmission by detecting a tag value in the initial part of the data field of the physical layer packet.

18. The method of any of claims 16 through 17, wherein the default communication protocol is a Bluetooth protocol and/or a Bluetooth mesh protocol.

19. The method of any of claims 16 through 18, further comprising:
relaying the detected message by transmission in accordance with the default communication protocol.

20. The method of any of claims 10 through 19, wherein
mapping (230) a candidate message from the collection of messages to a candidate codeword comprises mapping each candidate message from the collection of messages to a respective candidate codeword, and
detecting (260) the candidate message comprises selecting the respective candidate codeword that coincides with the current codeword.

21. The method of any of claims 10 through 20, further comprising, when (250) the current codeword does not coincide with the candidate codeword:
mapping (255) the candidate message from the collection of messages to an alternative candidate codeword based on an assumed lost codeword and based on a counter value for an assumed lost codeword; and
detecting (260) the candidate message when (250) the current codeword coincides with the alternative candidate codeword.

22. A method of a provisioning node for controlling conveyance of a message selected from a collection of messages from a transmitter node to a receiver node, the method comprising:
providing (312), to the transmitter node and to the receiver node, information for mapping a message from the collection of messages to a current codeword based on a previous codeword and/or based on a counter value, wherein the counter value is updated (125) before the mapping.

23. The method of claim 22, wherein the mapping for a specific message results in different current codewords for at least some differing previous codewords and/or for at least some differing counter values.

24. The method of any of claims 22 through 23, further comprising:
determining whether or not a size of the collection of messages exceeds a collection size threshold, wherein the step of providing is responsive to the size of the collection of messages not exceeding the collection size threshold.

25. The method of any of claims 22 through 24, wherein the information for mapping comprises indication of one or more mapping parameters.

26. The method of claim 25, wherein the one or more mapping parameters comprise one or more of:
a shared secret;
a collection of allowed codewords;
a codeword length;
an initial codeword; and
an initial counter value.

27. The method of any of claims 1 through 26, wherein the codewords are codewords of a block code.

28. An apparatus for a transmitter node, the apparatus being for conveyance - from the transmitter node to a receiver node - of a message selected from a collection of messages, the apparatus comprising controlling circuitry (500) configured to cause:
updating of a counter value;
mapping of the message to a current codeword based on a previous codeword and based on the counter value; and
transmission of the current codeword to convey the message to the receiver node.

29. The apparatus of claim 28, wherein the mapping of a specific message results in different current codewords for at least some differing previous codewords and/or for at least some differing counter values.

30. The apparatus of any of claims 28 through 29, wherein the controlling circuitry is further configured to cause updating of the counter before the mapping by:
addition of a fixed update value to the counter; or
addition of a variable update value to the counter, wherein the variable update value is based on the message and a current counter value; or
addition of an update value to a first counter when the message is a first message, and addition of the update value to a second counter when the message is a second message.

31. The apparatus of any of claims 29 through 30, wherein the controlling circuitry is further configured to cause:
determination of whether or not a size of the collection of messages exceeds a collection size threshold, wherein mapping of the message to a current codeword and transmission of the current codeword are responsive to the size of the collection of messages not exceeding the collection size threshold.

32. An apparatus for a receiver node, the apparatus being for detection of a message selected from a collection of messages by a transmitter node, the apparatus comprising controlling circuitry (600) configured to cause:
updating of a counter value;
mapping of a candidate message from the collection of messages to a candidate codeword based on a previous codeword and based on the counter value;
reception of a current codeword from the transmitter node; and
detection of the candidate message responsive to the current codeword coinciding with the candidate codeword.

33. The apparatus of claim 32, wherein the mapping of a specific candidate message results in different candidate codewords for at least some differing previous codewords and for at least some differing counter values.

34. An apparatus for a provisioning node, the apparatus being for control of conveyance of a message selected from a collection of messages from a transmitter node to a receiver node, the apparatus comprising controlling circuitry (700) configured to cause:
provision, to the transmitter node and to the receiver node, of information for mapping a message from the collection of messages to a current codeword based on a previous codeword and/or based on a counter value.

35. The apparatus of claim 34, wherein mapping of a specific message results in different current codewords for at least some differing previous codewords and/or for at least some differing counter values.

## Patentansprüche

1. Verfahren eines Senderknotens zum Übermitteln einer aus einer Nachrichtensammlung ausgewählten Nachricht an einen Empfangsknoten, wobei das Verfahren Folgendes umfasst:
Aktualisieren (125) eines Zählerwerts und dann;
Zuordnung (130, 324) der Nachricht zu einem aktuellen Codewort basierend auf einem vorherigen Codewort und basierend auf dem Zählerwert; und
Übertragen (140, 328) des aktuellen Codeworts, um die Nachricht an den Empfangsknoten zu übermitteln.

2. Verfahren nach Anspruch 1, wobei die Zuordnung für eine bestimmte Nachricht in unterschiedlichen aktuellen Codewörtern für mindestens einige unterschiedliche vorherige Codewörter und/oder für mindestens einige unterschiedliche Zählerwerte resultiert.

3. Verfahren nach einem der Ansprüche 1 bis 2, weiter umfassend Aktualisieren (125) des Zählers vor dem Zuordnungsschritt durch:
Hinzufügen eines festen Aktualisierungswerts zum Zähler; oder
Hinzufügen eines variablen Aktualisierungswerts zum Zähler, wobei der variable Aktualisierungswert auf der Nachricht und/oder einem aktuellen Zählerwert basiert; oder
Hinzufügen eines Aktualisierungswerts zu einem ersten Zähler, wenn die Nachricht eine erste Nachricht ist, und Hinzufügen des Aktualisierungswerts zu einem zweiten Zähler, wenn die Nachricht eine zweite Nachricht ist.

4. Verfahren nach einem der Ansprüche 1 bis 3, weiter umfassend:
Bestimmen (110), ob eine Größe der Nachrichtensammlung einen Sammlungsgrößenschwellenwert überschreitet oder nicht, wobei die Schritte von Zuordnung (130) der Nachricht zu einem aktuellen Codewort und Übertragen (140) des aktuellen Codeworts infolgedessen erfolgen, dass die Größe der Nachrichtensammlung den Sammlungsgrößenschwellenwert nicht überschreitet.

5. Verfahren nach einem der Ansprüche 1 bis 4, weiter umfassend Erfassen (115, 322) einer Angabe eines oder mehrerer Zuordnungsparameter.

6. Verfahren nach Anspruch 5, wobei der eine oder die mehreren Zuordnungsparameter eines oder mehrere umfassen von:
einem geteilten Geheimnis;
einer Sammlung zulässiger Codewörter;
einer Codewortlänge;
einem anfänglichen Codewort; und
einem anfänglichen Zählerwert.

7. Verfahren nach einem der Ansprüche 1 bis 6, wobei der Senderknoten so konfiguriert ist, dass er Nachrichten unter Verwendung (105) eines Standardkommunikationsprotokolls übermittelt, in dem Pakete der physikalischen Schicht mindestens eines des Folgenden umfassen: ein Adressfeld, ein Datenkopffeld und ein Datenfeld, und
wobei Übertragen (140) des aktuellen Codeworts Übertragen eines Pakets der physikalischen Schicht umfasst, das das aktuelle Codewort umfasst.

8. Verfahren nach Anspruch 7, weiter umfassend eines oder mehrere von:
Einfügen (135) des aktuellen Codeworts in das Adressfeld des Pakets der physikalischen Schicht;
Freilassen des Datenfelds des Pakets der physikalischen Schicht;
Einfügen (135) eines ersten Teils des aktuellen Codeworts in das Adressfeld des Paketes der physikalischen Schicht und eines zweiten Teils des aktuellen Codeworts in das Datenfeld des Paketes der physikalischen Schicht;
Einfügen (135) des aktuellen Codeworts in das Datenfeld des Pakets der physikalischen Schicht;
Angeben von Codewortübertragung unter Verwendung eines dedizierten Inhalts des Adressfelds des Pakets der physikalischen Schicht;
Angeben von Codewortübertragung unter Verwendung eines werbenden Pakettypfelds des Datenkopffelds des Pakets der physikalischen Schicht; und
Angeben von Codewortübertragung unter Verwendung eines Kennzeichenwerts im anfänglichen Teil des Datenfelds des Pakets der physikalischen Schichtpaket.

9. Verfahren nach einem der Ansprüche 7 bis 8, wobei das Standardkommunikationsprotokoll ein Bluetooth-Protokoll und/oder ein Bluetooth-Mesh-Protokoll ist.

10. Verfahren eines Empfangsknotens zum Erfassen einer aus einer Nachrichtensammlung ausgewählten Nachricht von einem Senderknoten, wobei das Verfahren Folgendes umfasst:
Aktualisieren (125) eines Zählerwerts und dann;
Zuordnung (230, 336) einer Kandidatennachricht aus der Nachrichtensammlung zu einem Kandidatencodewort basierend auf einem vorherigen Codewort und basierend auf dem Zählerwert;
Empfangen (240, 338) eines aktuellen Codeworts vom Senderknoten; und
Erfassen (260, 339) der Kandidatennachricht, wenn (250) das aktuelle Codewort mit dem Kandidatencodewort übereinstimmt.

11. Verfahren nach Anspruch 10, wobei die Zuordnung für eine bestimmte Kandidatennachricht in unterschiedlichen Kandidatencodewörtern für mindestens einige unterschiedliche vorherige Codewörter und/oder für mindestens einige unterschiedliche Zählerwerte resultiert.

12. Verfahren nach einem der Ansprüche 10 bis 11, weiter umfassend Aktualisieren (225) des Zählers vor dem Zuordnungsschritt durch:
Hinzufügen eines festen Aktualisierungswerts zum Zähler; oder
Hinzufügen eines variablen Aktualisierungswerts zum Zähler, wobei der variable Aktualisierungswert auf der Kandidatennachricht und einem aktuellen Zählerwert basiert; oder
Hinzufügen eines Aktualisierungswerts zu einem ersten Zähler, wenn die Kandidatennachricht eine erste Nachricht ist, und Hinzufügen des Aktualisierungswerts zu einem zweiten Zähler, wenn die Kandidatennachricht eine zweite Nachricht ist.

13. Verfahren nach einem der Ansprüche 10 bis 12, weiter umfassend:
Bestimmen (210), ob eine Größe der Nachrichtensammlung einen Sammlungsgrößenschwellenwert überschreitet oder nicht, wobei die Schritte von Zuordnung (230) der Kandidatennachricht zu einem Kandidatencodewort, Empfangen (240) des aktuellen Codeworts und Erfassen (260) der Kandidatennachricht infolgedessen erfolgen, dass die Größe der Nachrichtensammlung den Sammlungsgrößenschwellenwert nicht überschreitet.

14. Verfahren nach einem der Ansprüche 10 bis 13, weiter umfassend Erfassen (215, 332) einer Angabe eines oder mehrerer Zuordnungsparameter.

15. Verfahren nach Anspruch 14, wobei der eine oder die mehreren Zuordnungsparameter eines oder mehrere umfassen von:
einem geteilten Geheimnis;
einer Sammlung zulässiger Codewörter;
einer Codewortlänge;
einem anfänglichen Codewort; und
einem anfänglichen Zählerwert.

16. Verfahren nach einem der Ansprüche 10 bis 15, wobei der Empfangsknoten so konfiguriert ist, dass er Nachrichten unter Verwendung eines Standardkommunikationsprotokolls erfasst, in dem Pakete der physikalischen Schicht mindestens eines des Folgenden umfassen: ein Adressfeld, ein Datenkopffeld und ein Datenfeld, und
wobei Empfangen des aktuellen Codeworts Empfangen eines Pakets der physikalischen Schicht umfasst, das das aktuelle Codewort umfasst.

17. Verfahren nach Anspruch 16, weiter umfassend eines oder mehrere von:
Extrahieren (245) des aktuellen Codeworts aus dem Adressfeld des Pakets der physikalischen Schicht;
Ignorieren des Datenfelds des Pakets der physikalischen Schicht;
Extrahieren (245) eines ersten Teils des aktuellen Codeworts aus dem Adressfeld des Pakets der physikalischen Schicht und eines zweiten Teils des aktuellen Codeworts aus dem Datenfeld des Pakets der physikalischen Schicht;
Extrahieren (245) des aktuellen Codeworts aus dem Datenfeld des Pakets der physikalischen Schicht;
Bestimmen von Codewortübertragung durch Erfassen eines dedizierten Inhalts des Adressfelds des Pakets der physikalischen Schicht;
Bestimmen von Codewortübertragung durch Erfassen eines werbenden Pakettypfelds des Datenkopffelds des Pakets der physikalischen Schicht; und
Bestimmen von Codewortübertragung durch Erfassen eines Kennzeichenwerts im anfänglichen Teil des Datenfelds des Pakets der physikalischen Schichtpaket.

18. Verfahren nach einem der Ansprüche 16 bis 17, wobei das Standardkommunikationsprotokoll ein Bluetooth-Protokoll und/oder ein Bluetooth-Mesh-Protokoll ist.

19. Verfahren nach einem der Ansprüche 16 bis 18, weiter umfassend:
Weiterleiten der erfassten Nachricht durch Übertragung gemäß dem Standardkommunikationsprotokoll.

20. Verfahren nach einem der Ansprüche 10 bis 19, wobei
Zuordnung (230) einer Kandidatennachricht aus der Nachrichtensammlung zu einem Kandidatencodewort Zuordnung jeder Kandidatennachricht aus der Nachrichtensammlung zu einem jeweiligen Kandidatencodewort umfasst, und
Erfassen (260) der Kandidatennachricht Auswählen des jeweiligen Codeworts umfasst, das mit dem aktuellen Codewort übereinstimmt.

21. Verfahren nach einem der Ansprüche 10 bis 20, weiter umfassend, wenn (250) das aktuelle Codewort nicht mit dem Kandidatencodewort übereinstimmt:
Zuordnung (255) der Kandidatennachricht aus der Nachrichtensammlung zu einem alternativen Kandidatencodewort basierend auf einem angenommenen verlorenen Codewort und basierend auf einem Zählerwert für ein angenommenes verlorenes Codewort; und
Erfassen (260) der Kandidatennachricht, wenn (250) das aktuelle Codewort mit dem alternativen Kandidatencodewort übereinstimmt.

22. Verfahren eines Bereitstellungsknotens zum Steuern einer Übermittlung einer aus einer Nachrichtensammlung ausgewählten Nachricht von einem Senderknoten an einen Empfangsknoten, wobei das Verfahren Folgendes umfasst:
Bereitstellen (312), an den Senderknoten und an den Empfangsknoten, von Informationen zur Zuordnung einer Nachricht aus der Nachrichtensammlung zu einem aktuellen Codewort basierend auf einem vorherigen Codewort und/oder basierend auf einem Zählerwert, wobei der Zählerwert vor der Zuordnung aktualisiert wird (125).

23. Verfahren nach Anspruch 22, wobei die Zuordnung für eine bestimmte Nachricht in unterschiedlichen aktuellen Codewörtern für mindestens einige unterschiedliche vorherige Codewörter und/oder für mindestens einige unterschiedliche Zählerwerte resultiert.

24. Verfahren nach einem der Ansprüche 22 bis 23, weiter umfassend:
Bestimmen, ob eine Größe der Nachrichtensammlung einen Sammlungsgrößenschwellenwert überschreitet oder nicht, wobei der Schritt vom Bereitstellen infolgedessen erfolgt, dass die Größe der Nachrichtensammlung den Sammlungsgrößenschwellenwert nicht überschreitet.

25. Verfahren nach einem der Ansprüche 22 bis 24, wobei die Informationen zur Zuordnung eine Angabe eines oder mehrerer Zuordnungsparameter umfassen.

26. Verfahren nach Anspruch 25, wobei der eine oder die mehreren Zuordnungsparameter eines oder mehrere umfassen von:
einem geteilten Geheimnis;
einer Sammlung zulässiger Codewörter;
einer Codewortlänge;
einem anfänglichen Codewort; und
einem anfänglichen Zählerwert.

27. Verfahren nach einem der Ansprüche 1 bis 26, wobei die Codewörter Codewörter eines Blockcodes sind.

28. Einrichtung für einen Senderknoten, wobei die Einrichtung zur Übermittlung - vom Senderknoten an einen Empfangsknoten - einer aus einer Nachrichtensammlung ausgewählten Nachricht dient, wobei die Einrichtung Steuerschaltung (500) umfasst, die dazu konfiguriert ist, Folgendes zu veranlassen:
Aktualisieren eines Zählerwerts;
Zuordnung der Nachricht zu einem aktuellen Codewort basierend auf einem vorherigen Codewort und basierend auf dem Zählerwert; und
Übertragung des aktuellen Codeworts, um die Nachricht an den Empfangsknoten zu übermitteln.

29. Einrichtung nach Anspruch 28, wobei die Zuordnung einer bestimmten Nachricht in unterschiedlichen aktuellen Codewörtern für mindestens einige unterschiedliche vorherige Codewörter und/oder für mindestens einige unterschiedliche Zählerwerte resultiert.

30. Einrichtung nach einem der Ansprüche 28 bis 29, wobei die Steuerschaltung weiter dazu konfiguriert ist, Aktualisieren des Zählers vor der Zuordnung durch Folgendes zu veranlassen:
Zusatz eines festen Aktualisierungswerts zum Zähler; oder
Zusatz eines variablen Aktualisierungswerts zum Zähler, wobei der variable Aktualisierungswert auf der Nachricht und einem aktuellen Zählerwert basiert; oder
Zusatz eines Aktualisierungswerts zu einem ersten Zähler, wenn die Nachricht eine erste Nachricht ist, und Zusatz des Aktualisierungswerts zu einem zweiten Zähler, wenn die Nachricht eine zweite Nachricht ist.

31. Einrichtung nach einem der Ansprüche 29 bis 30, wobei die Steuerschaltung weiter dazu konfiguriert ist, Folgendes zu veranlassen:
Bestimmung, ob eine Größe der Nachrichtensammlung einen Sammlungsgrößenschwellenwert überschreitet oder nicht, wobei Zuordnung der Nachricht zu einem aktuellen Codewort und Übertragung des aktuellen Codeworts infolgedessen erfolgen, dass die Größe der Nachrichtensammlung den Sammlungsgrößenschwellenwert nicht überschreitet.

32. Einrichtung für einen Empfangsknoten, wobei die Einrichtung zur Erfassung einer aus einer Nachrichtensammlung ausgewählten Nachricht durch einen Senderknoten dient, wobei die Einrichtung Steuerschaltung (600) umfasst, die dazu konfiguriert ist, Folgendes zu veranlassen:
Aktualisieren eines Zählerwerts;
Zuordnung einer Kandidatennachricht aus der Nachrichtensammlung zu einem Kandidatencodewort basierend auf einem vorherigen Codewort und basierend auf dem Zählerwert;
Empfang eines aktuellen Codeworts vom Senderknoten; und
Erfassung der Kandidatennachricht infolgedessen, dass das aktuelle Codewort mit dem Kandidatencodewort übereinstimmt.

33. Einrichtung nach Anspruch 32, wobei die Zuordnung einer bestimmten Kandidatennachricht in unterschiedlichen Kandidatencodewörtern für mindestens einige unterschiedliche vorherige Codewörter und für mindestens einige unterschiedliche Zählerwerte resultiert.

34. Einrichtung für einen Bereitstellungsknoten, wobei die Einrichtung zur Steuerung der Übermittlung einer aus einer Nachrichtensammlung ausgewählten Nachricht von einem Senderknoten an einen Empfangsknoten dient, wobei die Einrichtung eine Steuerschaltung (700) umfasst, die für Folgendes konfiguriert ist:
Bereitstellung, an den Senderknoten und an den Empfangsknoten, von Informationen zur Zuordnung einer Nachricht aus der Nachrichtensammlung zu einem aktuellen Codewort basierend auf einem vorherigen Codewort und/oder basierend auf einem Zählerwert.

35. Einrichtung nach Anspruch 34, wobei Zuordnung einer bestimmten Nachricht in unterschiedlichen aktuellen Codewörtern für mindestens einige unterschiedliche vorherige Codewörter und/oder für mindestens einige unterschiedliche Zählerwerte resultiert.

## Revendications

1. Procédé d'un nœud émetteur pour acheminer un message sélectionné parmi une collection de messages à un nœud récepteur, le procédé comprenant :
la mise à jour (125) d'une valeur de compteur puis ;
la mappage (130, 324) du message sur un mot de code actuel sur la base d'un mot de code précédent et sur la base de la valeur de compteur ; et
la transmission (140, 328) du mot de code actuel pour acheminer le message au nœud récepteur.

2. Procédé selon la revendication 1, dans lequel le mappage d'un message spécifique donne lieu à des mots de code actuels différents pour au moins certains mots de code précédents différents et/ou pour au moins certaines valeurs de compteur différentes.

3. Procédé selon l'une quelconque des revendications 1 à 2, comprenant en outre la mise à jour (125) du compteur avant l'étape de mappage par :
l'ajout d'une valeur de mise à jour fixe au compteur ; ou
l'ajout d'une valeur de mise à jour variable au compteur, dans lequel la valeur de mise à jour variable est basée sur le message et/ou une valeur de compteur actuelle ; ou
l'ajout d'une valeur de mise à jour à un premier compteur lorsque le message est un premier message et l'ajout de la valeur de mise à jour à un second compteur lorsque le message est un second message.

4. Procédé selon l'une quelconque des revendications 1 à 3, comprenant en outre :
le fait de déterminer (110) si une taille de la collection de messages dépasse ou non un seuil de taille de collection, dans lequel les étapes de mappage (130) du message sur un mot de code actuel et de transmission (140) du mot de code actuel sont sensibles au fait que la taille de la collection de messages ne dépasse pas le seuil de taille de collection.

5. Procédé selon l'une quelconque des revendications 1 à 4, comprenant en outre l'acquisition (115, 322) d'une indication d'un ou plusieurs paramètres de mappage.

6. Procédé selon la revendication 5, dans lequel les un ou plusieurs paramètres de mappage comprennent un ou plusieurs éléments parmi :
un secret partagé ;
une collection de mots de code autorisés ;
une longueur de mot de code ;
un mot de code initial ; et
une valeur de compteur initiale.

7. Procédé selon l'une quelconque des revendications 1 à 6, dans lequel le nœud émetteur est configuré pour acheminer des messages en utilisant (105) un protocole de communication par défaut, dans lequel des paquets de couche physique comprennent au moins un parmi : un champ d'adresse, un champ d'en-tête et un champ de données et
dans lequel la transmission (140) du mot de code actuel comprend la transmission d'un paquet de couche physique comprenant le mot de code actuel.

8. Procédé selon la revendication 7, comprenant en outre un ou plusieurs parmi :
l'insertion (135) du mot de code actuel dans le champ d'adresse du paquet de couche physique ;
le fait de laisser le champ de données du paquet de couche physique vide ;
l'insertion (135) d'une première partie du mot de code actuel dans le champ d'adresse du paquet de couche physique et d'une seconde partie du mot de code actuel dans le champ de données du paquet de couche physique ;
l'insertion (135) du mot de code actuel dans le champ de données du paquet de couche physique ;
l'indication de la transmission du mot de code en utilisant un contenu dédié du champ d'adresse du paquet de couche physique ;
l'indication de la transmission du mot de code en utilisant un champ de type paquet publicitaire du champ d'en-tête du paquet de couche physique ; et
l'indication de la transmission du mot de code en utilisant une valeur d'étiquette dans la partie initiale du champ de données du paquet de couche physique.

9. Procédé selon l'une quelconque des revendications 7 à 8, dans lequel le protocole de communication par défaut est un protocole Bluetooth et/ou un protocole de maillage Bluetooth.

10. Procédé d'un nœud récepteur pour détecter un message sélectionné parmi une collection de messages par un nœud émetteur, le procédé comprenant :
la mise à jour (125) d'une valeur de compteur puis ;
le mappage (230, 336) d'un message candidat de la collection de messages sur un mot de code candidat sur la base d'un mot de code précédent et sur la base de la valeur du compteur ;
la réception (240, 338) d'un mot de code actuel en provenance du nœud émetteur ; et
la détection (260, 339) du message candidat lorsque (250) le mot de code actuel coïncide avec le mot de code candidat.

11. Procédé selon la revendication 10, dans lequel le mappage d'un message candidat spécifique donne lieu à des mots de code candidats différents pour au moins certains mots de code précédents différents et/ou pour au moins certaines valeurs de compteur différentes.

12. Procédé selon l'une quelconque des revendications 10 à 11, comprenant en outre la mise à jour (225) du compteur avant l'étape de mappage par :
l'ajout d'une valeur de mise à jour fixe au compteur ; ou
l'ajout d'une valeur de mise à jour variable au compteur, dans lequel la valeur est basée sur le message candidat et la valeur de compteur actuelle ; ou
l'ajout d'une valeur de mise à jour à un premier compteur lorsque le message candidat est un premier message et l'ajout de la valeur de mise à jour à un second compteur lorsque le message candidat est un second message.

13. Procédé selon l'une quelconque des revendications 10 à 12, comprenant en outre :
le fait de déterminer (210) si une taille de la collection de messages dépasse ou non un seuil de taille de collection, dans lequel les étapes de mappage (230) du message candidat sur un mot de code candidat, de réception (240) du mot de code actuel et de détection (260) du message candidat sont sensibles au fait que la taille de la collection de messages ne dépasse pas le seuil de taille de collection.

14. Procédé selon l'une quelconque des revendications 10 à 13, comprenant en outre l'acquisition (215, 332) d'une indication d'un ou plusieurs paramètres de mappage.

15. Procédé selon la revendication 14, dans lequel les un ou plusieurs paramètres de mappage comprennent un ou plusieurs parmi :
un secret partagé ;
une collection de mots de code autorisés ;
une longueur de mot de code ;
un mot de code initial ; et
une valeur de compteur initiale.

16. Procédé selon l'une quelconque des revendications 10 à 15, dans lequel le nœud récepteur est configuré pour détecter des messages en utilisant un protocole de communication par défaut, dans lequel des paquets de couche physique comprennent au moins un parmi : un champ d'adresse, un champ d'en-tête et un champ de données et
dans lequel la réception du mot de code actuel comprend la réception d'un paquet de couche physique comprenant le mot de code actuel.

17. Procédé selon la revendication 16, comprenant en outre un ou plusieurs parmi :
l'extraction (245) du mot de code actuel du champ d'adresse du paquet de couche physique ;
le fait d'ignorer le champ de données du paquet de la couche physique ;
l'extraction (245) d'une première partie du mot de code actuel du champ d'adresse du paquet de couche physique et d'une seconde partie du mot de code actuel du champ de données du paquet de couche physique ;
l'extraction (245) du mot de code actuel du champ de données du paquet de couche physique ;
la détermination d'une transmission de mot de code en détectant un contenu dédié du champ d'adresse du paquet de couche physique ;
la détermination d'une transmission de mot de code par la détection d'un champ de type de paquet publicitaire dans le champ d'en-tête du paquet de couche physique ; et
la détermination d'une transmission de mot de code par la détection d'une valeur d'étiquette dans la partie initiale du champ de données du paquet de couche physique.

18. Procédé selon l'une quelconque des revendications 16 à 17, dans lequel le protocole de communication par défaut est un protocole Bluetooth et/ou un protocole de maillage Bluetooth.

19. Procédé selon l'une quelconque des revendications 16 à 18, comprenant en outre :
le relais du message détecté par transmission conformément au protocole de communication par défaut.

20. Procédé selon l'une quelconque des revendications 10 à 19, dans lequel
le mappage (230) d'un message candidat de la collection de messages sur un mot de code candidat comprend un mappage de chaque message candidat de la collection de messages sur un mot de code candidat respectif, et
la détection (260) du message candidat comprend la sélection du mot de code candidat respectif qui coïncide avec le mot de code actuel.

21. Procédé selon l'une quelconque des revendications 10 à 20, comprenant en outre, lorsque (250) le mot de code actuel ne coïncide pas avec le mot de code candidat :
le mappage (255) du message candidat de la collection de messages sur un mot de code candidat alternatif sur la base d'un mot de code perdu supposé et basé sur la base d'une valeur de compteur pour un mot de code perdu supposé ; et
la détection (260) du message candidat lorsque (250) le mot de code actuel coïncide avec le mot de code candidat alternatif.

22. Procédé d'un nœud d'approvisionnement pour commander un acheminement d'un message sélectionné parmi une collection de messages d'un nœud émetteur à un nœud récepteur, le procédé comprenant :
la fourniture (312), au nœud émetteur et au nœud récepteur, d'informations nécessaires pour mapper un message de la collection de messages sur un mot de code actuel sur la base d'un mot de code précédent et/ou sur la base d'une valeur de compteur, dans lequel la valeur de compteur est mise à jour (125) avant le mappage.

23. Procédé selon la revendication 22, dans lequel le mappage d'un message spécifique donne lieu à des mots de code actuels différents pour au moins certains mots de code précédents différents et/ou pour au moins certaines valeurs de compteur différentes.

24. Procédé selon l'une quelconque des revendications 22 à 23, comprenant en outre :
le fait de déterminer si une taille de la collection de messages dépasse ou non un seuil de taille de collection, dans lequel l'étape de fourniture est sensible au fait que la taille de la collection de messages ne dépasse pas le seuil de taille de collection.

25. Procédé selon l'une quelconque des revendications 22 à 24, dans lequel les informations de mappage comprennent une indication d'un ou plusieurs paramètres de mappage.

26. Procédé selon la revendication 25, dans lequel les un ou plusieurs paramètres de mappage comprennent un ou plusieurs parmi :
un secret partagé ;
une collection de mots de code autorisés ;
une longueur d'un mot de code ;
un mot de code initial ; et
une valeur de compteur initiale.

27. Procédé selon l'une quelconque des revendications 1 à 26, dans lequel les mots de code sont des mots de code d'un code de bloc.

28. Appareil pour un nœud émetteur, l'appareil étant destiné à l'acheminement - du nœud émetteur à un nœud récepteur - d'un message sélectionné parmi une collection de messages, l'appareil comprenant un circuit de commande (500) configuré pour provoquer :
une mise à jour d'une valeur de compteur ;
un mappage du message sur un mot de code actuel sur la base d'un mot de code précédent et sur la base de la valeur de compteur ; et
une transmission du mot de code actuel pour acheminer le message au nœud récepteur.

29. Appareil selon la revendication 28, dans lequel le mappage d'un message spécifique donne lieu à des mots de code actuels différents pour au moins certains mots de code précédents différents et/ou pour au moins certaines valeurs de compteur différentes.

30. Appareil selon l'une quelconque des revendications 28 à 29, dans lequel le circuit de commande est en outre configuré pour provoquer une mise à jour du compteur avant le mappage par :
ajout d'une valeur de mise à jour fixe au compteur ; ou
ajout d'une valeur de mise à jour variable au compteur, dans lequel la valeur de mise à jour variable est basée sur le message et une valeur actuelle de compteur ; ou
ajout d'une valeur de mise à jour à un premier compteur lorsque le message est un premier message et ajout de la valeur de mise à jour à un second compteur lorsque le message est un second message.

31. Appareil selon l'une quelconque des revendications 29 à 30, dans lequel le circuit de commande est en outre configuré pour provoquer :
le fait de déterminer si une taille de la collection de messages dépasse ou non un seuil de taille de collection, dans lequel le mappage du message sur un mot de code actuel et la transmission du mot de code actuel sont sensibles au fait que la taille de la collection de messages ne dépasse pas le seuil de taille de collection.

32. Appareil pour un nœud récepteur, l'appareil étant destiné à la détection d'un message sélectionné parmi une collection de messages par un nœud émetteur, l'appareil comprenant un circuit de commande (600) configuré pour provoquer :
la mise à jour d'une valeur de compteur ;
le mappage d'un message candidat de la collection de messages sur un mot de code candidat sur la base d'un mot de code précédent et sur la base de la valeur de compteur ;
la réception d'un mot de code actuel en provenance du nœud émetteur; et
la détection du message candidat sensible au mot de code actuel coïncidant avec le mot de code candidat.

33. Appareil selon la revendication 32, dans lequel le mappage d'un message candidat spécifique donne lieu à des mots de code candidats différents pour au moins certains mots de code précédents différents et pour au moins certaines valeurs de compteur différentes.

34. Appareil pour un nœud d'approvisionnement, l'appareil étant destiné à commander un acheminement d'un message sélectionné parmi une collecte de messages d'un nœud émetteur vers un nœud récepteur, l'appareil comprenant un circuit de commande (700) configuré pour provoquer :
la fourniture, au nœud émetteur et au nœud récepteur, d'informations pour mapper un message de la collection de messages sur un mot de code actuel sur la base d'un mot de code précédent et/ou sur la base d'une valeur de compteur.

35. Appareil selon la revendication 34, dans lequel le mappage d'un message spécifique donne lieu à des mots de code actuels différents pour au moins certains mots de code précédents différents et/ou pour au moins certaines valeurs de compteur différentes.
